# EUROPÄISCHE PATENTSCHRIFT

(11) **EP 4 505 867 B1**
(45) Veröffentlichungstag und Bekanntmachung des Hinweises auf die Patenterteilung: **27.05.2026**
(21) Anmeldenummer: 23191130.6
(22) Anmeldetag: 11.08.2023
(51) Int. Cl.: A01G 23/00, F16B 15/00, B27L 1/00, B27L 1/04

(54) **KLAMMERANORDNUNG ZUR RISSBEGRENZUNG BEI BAUMSTÄMMEN**
CLAMP ASSEMBLY FOR LIMITING CRACK IN LOGS
AGENCEMENT D'AGRAFAGE POUR LIMITER LA FISSURATION DANS DES TRONCS D'ARBRES

(43) Veröffentlichungstag der Anmeldung: 12.02.2025
(73) Patentinhaber: Latschbacher GmbH, 4484 Kronstorf (AT)
(72) Erfinder: Latschbacher, Klaus, 4484 Kronstorf (AT)
(74) Vertreter: Patentanwälte Magenbauer & Kollegen Partnerschaft mbB

(56) Entgegenhaltungen:
- EP-A1- 3 287 647
- DE-T2- 60 116 645
- FR-A1- 2 530 177
- US-B2- 7 721 400

## Beschreibung

Die Erfindung betrifft eine Klammeranordnung zur Rissbegrenzung bei Baumstämmen.

Die EP 3 287 647 A1 offenbart eine Klammeranordnung für Baumstämme, mit einem Grundkörper, an dem wenigstens drei beabstandet zueinander angeordnete Haltezungen ausgebildet sind, wobei der Grundkörper und die Haltezungen als Schneiden in einer gemeinsamen Schneidrichtung ausgerichtet sind, und wobei am Grundkörper und/oder an wenigstens einer Haltezunge wenigstens zwei Rastnasen für eine lösbare Verbindung mit einem Setzgerät ausgebildet sind.

Die Aufgabe der Erfindung besteht darin, eine Klammeranordnung bereitzustellen, die auch bei Stammholz mit hoher Dichte eingesetzt werden kann.

Diese Aufgabe wird für eine Klammeranordnung der eingangs genannten Art dadurch gelöst, dass die Klammeranordnung zwei Schneiden aufweist, die jeweils von einer Rückenfläche bis zu einer Schneidkante längs einer Schneidrichtung erstreckt sind und die in der Schneidrichtung verjüngt ausgebildet sind, wobei die Schneidrichtungen der beiden Schneiden parallel zueinander ausgerichtet sind und wobei die beiden Schneiden, insbesondere ausschließlich, von einem ersten Verbindungssteg, der sich zwischen ersten Endbereichen der beiden Schneiden erstreckt, und von einem zweiten Verbindungssteg, der sich und zwischen zweiten Endbereichen der beiden Schneiden erstreckt, verbunden sind.

Die Schneidrichtung bezeichnet diejenige Richtung, in der die Schneide mit dem geringsten Widerstand in einen Holzstamm eingetrieben werden kann. Die beiden Schneiden sind über den ersten und den zweiten Verbindungssteg derart miteinander verbunden, dass ihre Schneidrichtungen parallel zueinander ausgerichtet sind, so dass auch für die beiden Schneiden ein möglichst geringer Widerstand bei einem Eintreibvorgang in einen Holzstamm gewährleistet werden kann. Bevorzugt ist vorgesehen, dass die beiden Schneiden ausschließlich an einen ersten Endbereich von dem ersten Verbindungssteg und an einem zweiten Endbereich von den zweiten Verbindungssteg miteinander verbunden sind. Hierdurch wird erreicht, dass sich die beiden Schneiden in einem zentralen Abschnitt zwischen den beiden Endbereichen während der Durchführung des Eintreibvorgangs jeweils frei elastisch oder elastisch und plastisch deformieren, womit eine vorteilhafte Anpassung der Schneiden an die Gegebenheiten am Holzstamm gewährleistet ist, der nicht zwingend eine homogene Dichte in demjenigen Bereich aufweist, in den die Klammeranordnung eingetrieben werden soll. Zudem können sich die beiden Schneiden in dem zentralen Abschnitt zwischen den beiden Endbereichen auch nach dem Eintreibvorgang in den Holzstamm unabhängig voneinander elastisch oder elastisch und plastisch deformieren. Diese Möglichkeit zur Deformation der beiden Schneiden ist insbesondere dann von Interesse, wenn sich ein Riss im Holzstamm, der von der Klammeranordnung überbrückt wird, beispielsweise durch Austrocknung des Holzstamms vergrößert. In diesem Fall begünstigt eine individuelle geometrische Anpassung des jeweiligen zentralen Abschnitts der beiden Schneiden eine homogene Lasteinleitung von dem Holzstamm auf die jeweilige Schneide, so dass lokale Überlastungen der Schneiden zumindest weitgehend vermieden werden können.

Bevorzugt ist vorgesehen, dass der erste Verbindungssteg und der zweite Verbindungsteg jeweils über einen Bruchteil eine Gesamtlänge der jeweiligen Schneide erstreckt sind. Besonders bevorzugt ist vorgesehen, dass dieser Bruchteil nicht größer als 25 Prozent, insbesondere nicht größer als 20 Prozent, ist. Somit ist sichergestellt, dass die Schneide zumindest über einen Bruchteil von 50 Prozent oder mehr die Möglichkeit hat, sich frei zu deformieren.

Die Schneide kann über ihre gesamte Erstreckung längs der Schneidrichtung verjüngt ausgebildet sein, wodurch sich in einer Querschnittsebene, die die Schneidrichtung mit umfasst, eine im Wesentlichen keilförmige Profilierung für die Schneide ergibt. Alternativ erstreckt sich die Schneide ausgehend von der Rückenfläche über einen Betrag von 50 bis 80 Prozent eines Abstands zwischen der Rückenfläche und der Schneidkante längs Schneidlänge mit einer konstanten Dicke und verjüngt sich erst in dem daran angrenzenden, bis zur Schneidkante erstreckten Bereich.

Vorteilhafte Weiterbildungen der Erfindung sind Gegenstand der Unteransprüche.

Zweckmäßig ist es, wenn der erste Verbindungssteg und der zweite Verbindungsteg jeweils zwischen den Rückenflächen der beiden Schneiden erstreckt sind. Bevorzugt ist vorgesehen, dass der erste Verbindungssteg eine erste Rückseite und der zweite Verbindungsteg eine zweite Rückseite aufweist, die zusammen mit den Rückenflächen der beiden Schneiden eine gemeinsame Fläche ausbilden. Ferner ist vorgesehen, dass sich sowohl der erste Verbindungssteg als auch der zweite Verbindungsteg ausgehend von der jeweiligen ersten bzw. zweiten Rückseite längs der Schneidrichtung erstrecken, wobei diese Erstreckung lediglich einen Bruchteil eines Abstands zwischen der Rückenfläche und der Schneidkante beträgt. Bevorzugt liegt dieser Bruchteil in einem Intervall zwischen 30 und 50 Prozent bezogen auf den Abstand zwischen Rückenfläche und Schneidkante.

Vorteilhaft ist es, wenn die beiden Schneiden in einer quer zur Schneidrichtung ausgerichteten Querschnittsebene eine Krümmung mit einem Krümmungsradius aufweisen, der 5-mal bis 10-mal größer als ein Abstand zwischen der Rückenfläche und der Schneidkante ist. In der Anwendungssituation für die Klammeranordnung soll eine Rissausbreitung in einer Stirnfläche eines Holzstamms unterbunden werden, wobei die Klammeranordnung einen bereits vorhandenen Riss oder eine Zone, in der ein Riss zu erwarten ist, überspannt. Sofern es, beispielsweise durch einen Trocknungsvorgang des Holzstamms, zu einer Rissausweitung kommt, findet eine Vergrößerung eines Abstands zwischen den ersten Endbereichen der Schneiden und den zweiten Endbereichen der Schneiden statt. Da die beiden Schneiden zwischen den beiden entgegengesetzten Endbereichen jeweils gekrümmt ausgebildet sind, vergrößert sich der Krümmungsradius der beiden Schneiden, da eine Art Streckungsvorgang für die beiden Schneiden in der quer zur Schneidrichtung ausgerichteten Querschnittsebene stattfindet. Hierdurch entsteht eine in radialer Richtung der jeweiligen Krümmung ausgerichtete resultierende Kraftwirkung, die von der jeweiligen Schneide auf das umgebende Holz des Holzstamms ausgeübt wird, wodurch eine Abstützwirkung zwischen der jeweiligen Schneide und dem Holzstamm eintritt, die ihrerseits zu einer Vergrößerung der von der Klammeranordnung an den Holzstamm bereitgestellten Reaktionskräfte führt. Dementsprechend gewährleistet die Krümmung der beiden Schneiden eine Verbesserung der Stabilisierungswirkung, die von der Klammeranordnung auf den Holzstamm ausgeübt werden kann, ohne dass hierfür ein erheblicher Zusatzaufwand im Hinblick auf die zur Herstellung der Klammeranordnung verwendeten Materialmenge notwendig ist. Beispielhaft ist vorgesehen, dass die Klammeranordnung aus einem Kunststoffmaterial im Spritzgussverfahren hergestellt ist. Alternativ kann die Klammeranordnung auch in einem generativen Kunststoffformungsverfahren (3D-Druck) oder als Stanz-Biegeteil aus einem Metallblech hergestellt werden.

Bevorzugt ist vorgesehen, dass ein erster Abstand zwischen den ersten Endbereichen der beiden Schneiden und ein zweiter Abstand zwischen den zweiten Endbereichen der beiden Schneiden größer sind als ein Abstand der beiden Schneiden in einem Zentralbereich zwischen dem ersten Endbereich und dem zweiten Endbereich. Hiermit ergibt sich, dass die im Wesentlichen bandförmigen ausgebildeten Schneiden sich mit konvex geformten Seitenflächen gegenüberliegen und dass im Anwendungsfall für die Klammeranordnung von den jeweiligen Schneiden radial und in einander entgegengesetzte Richtungen ausgerichtete Kräfte voneinander abweisenden und konkav geformten Seitenflächen der beiden Schneiden in das umgebende Holz des Holzstamms eingeleitet werden können.

Bei einer Weiterbildung der Erfindung ist vorgesehen, dass wenigstens eine Schneide mit einem Zentrierdorn versehen ist, der sich in der Schneidrichtung über die Schneidkante hinaus erstreckt und der eine in der Schneidrichtung verjüngt ausgebildete Zentrierspitze aufweist. Mit dem wenigstens einem Zentrierdorn wird der Eintreibvorgang für die Klammeranordnung erleichtert, da der eine Zentrierdorn, der einer der Schneiden zugeordnet ist, oder die mehreren Zentrierdorne, die einer oder beiden Schneiden zugeordnet sind, verglichen mit den beiden Schneiden einen erheblich kleineren Querschnitt aufweisen und damit auch weniger Holz verdrängen müssen, um zumindest eine erste Anhaftung der Klammeranordnung am Holzstamm zu gewährleisten. Beispielhaft weist der Zentrierdorn eine kegelförmige Geometrie auf, die sich mit zunehmendem Abstand von der Rückenfläche bis zu einer Spitze verjüngt. Alternativ ist der Zentrierdorn abschnittsweise zylindrisch, insbesondere kreiszylindrisch, ausgebildet und verjüngt sich endseitig kegelförmig. Um gewährleisten zu können, dass bei einem Eintreibvorgang für die Klammeranordnung zunächst der wenigstens eine Zentrierdorn in Anlage zu Oberfläche des Holzstamms kommt, ragt der wenigstens eine Zentrierdorn längs der Schneidrichtung über die Schneidkante hinaus von der Schneide ab. Vorteilhaft ist es, wenn an der Klammeranordnung wenigstens drei Zentrierdorne angebracht sind, wobei die Zentrierdorn vorzugsweise den ersten und/oder zweiten Endbereichen der Schneiden zugeordnet sind. Besonders bevorzugt ist vorgesehen, dass an der Klammeranordnung insgesamt vier Zentrierdorne angeordnet sind, die jeweils paarweise dem ersten Endbereich und dem zweiten Endbereich zugeordnet sind. Beispielhaft ist vorgesehen, dass der Zentrierdorn integraler Bestandteil der Schneide ist, sodass der Zentrierdorn quer zur Schneidrichtung symmetrisch von der Schneide abragt oder derart in die Schneide integriert ist, dass er lediglich nur in der Schneidrichtung über die Schneidkante hinausragt.

In weiterer Ausgestaltung der Erfindung ist vorgesehen, dass der Zentrierdorn quer zur Schneidrichtung angrenzend an die Schneide angeordnet ist und/oder dass der Zentrierdorn an einer Rückseite, die der Zentrierspitze abgewandt ist, eine Vertiefung mit einer Geometrie aufweist, die einer Geometrie der Zentrierspitze entspricht. Bei einer derartigen Ausgestaltung des Zentrierdorns ist es vorteilhaft, dass die Zentrierfunktion des Zentrierdorn von der Schneidfunktion der Schneide getrennt ist, sodass diese beiden Komponenten jeweils optimal auf ihren Verwendungszweck angepasst werden können. Ergänzend oder alternativ kann vorgesehen sein, dass der Zentrierdorn an einer Rückseite mit einer Vertiefung versehen ist, die zumindest weitgehend identisch mit dem verjüngten Bereich des Zentrierdorns ausgebildet ist. Hierdurch wird eine Stapelbarkeit für die Klammeranordnung begünstigt, sodass eine Vielzahl derartiger Klammeranordnungen beispielsweise in einer linearen Aufreihung in einem Magazin aufgenommen werden kann, das von seiner Zweckbestimmung für die Aufnahme von Holzmarkierungsplättchen ausgebildet ist. Bevorzugt ist vorgesehen, dass bei einer Aufreihung mehrerer Klammeranordnungen die Zentrierdorne einer vorausgehenden Klammeranordnung die nachfolgende Klammeranordnung derart beranden und in die Vertiefungen der Zentrierdorn der nachfolgenden Klammeranordnung eingreifen, dass eine stabile Stapelverbindung zwischen den Klammeranordnungen geschaffen wird.

Bei einer vorteilhaften Weiterbildung der Erfindung ist vorgesehen, dass der Zentrierdorn als in Schneidrichtung erstreckte Verlängerung der Schneide ausgebildet ist. Der Zentrierdorn bildet somit einen Fortsatz, der direkt der Schneide zugeordnet ist und kann auch als bereichsweise abragende Projektion der Schneide in der Schneidrichtung bezeichnet werden. Der Zentrierdorn ist somit zentrisch an der Schneide abgestützt, so dass bei der Durchführung des Einschlagvorgangs für die Klammeranordnung in einen Holzstamm unerwünschte Querkräfte, die vom Zentrierdorn auf die Schneide abgeleitet werden müssen, vermieden werden können. Vielmehr ist durch diese Anordnung des Zentrierdorns ein geradliniger Kraftfluss von der Rückenfläche der Schneide über den Schneidenkörper bis in den Zentrierdorn gewährleistet.

Zweckmäßig ist es, wenn die beiden Schneiden spiegelsymmetrisch zueinander ausgerichtet sind, wobei eine Spiegelebene für die beiden Schneiden normal zu einem minimalen Abstand der beiden Schneiden ausgerichtet ist. Hierdurch soll ein zumindest weitgehend gehendes Deformationsverhalten für die Klammeranordnung erzielt werden. Hierbei liegt die Überlegung zugrunde, dass die Klammeranordnung im Idealfall derart relativ zu einem Riss in einem Holzstamm eingetrieben wird, dass der minimale Abstand zwischen den beiden Schneiden parallel zum Riss und vorzugsweise unmittelbar über dem Riss angeordnet ist und die ersten und zweiten Endbereiche der Schneiden maximal beabstandet vom Riss angeordnet sind. Bevorzugt ist vorgesehen, dass der minimale Abstand zwischen den Schneiden kleiner als eine Erstreckung der jeweiligen Schneide zwischen der Rückenfläche und der Schneidkante ist, insbesondere in einem Bereich zwischen 60 Prozent und 90 Prozent der Erstreckung der jeweiligen Schneide liegt.

Bei einer vorteilhaften Weiterbildung der Erfindung ist vorgesehen, dass die beiden Schneiden jeweils am ersten Endbereich und/oder am zweiten Endbereich mit einer Querschneide versehen sind, deren Querschneidkante in einem Winkelbereich zwischen 70 Grad und 110 Grad zur Schneidkante ausgerichtet ist. Die Aufgabe der Querschneide besteht darin, eine Rutschbewegung der zugeordneten Schneide zu verhindern, wie sie bei zunehmenden Rissbildungskräften im Holzstamm auftreten kann. Hierbei bildet die Querschneide einen Widerhaken, mit dem Kräfte, die beispielsweise von dem ersten Endbereich der Schneide in Richtung des zweiten Endbereichs der Schneide weisen, durch eine Verankerung im Holz des Holzstamms abgefangen werden können. Vorzugsweise ist eine Länge der Querschneidkante deutlich kürzer als eine Länge der Schneidkante ausgebildet ist. Die Querschneide kann derart ausgebildet sein, dass die Querschneidkante auf dem gleichen Niveau wie die Schneidkante der Schneide liegt. Alternativ kann vorgesehen sein, dass die Querschneide in Schneidrichtung über die Schneidkante der Schneide hinausragt, womit eine Funktion ähnlich der Funktion des Zentrierdorns gewährleistet werden kann.

In weiterer Ausgestaltung der Erfindung ist vorgesehen, dass der erste Verbindungssteg und der zweite Verbindungsteg jeweils bogenförmig ausgebildet sind, wobei einander entgegengesetzte Endbereiche des ersten Verbindungsstegs und einander entgegengesetzte Endbereiche des zweiten Verbindungsstegs jeweils normal zu konvex geformten Innenoberflächen der beiden Schneiden ausgerichtet sind. Durch die Bogenform für den ersten Verbindungssteg und den zweiten Verbindungssteg sowie durch die Ausrichtung der jeweiligen Endbereiche der beiden Verbindungsstege gegenüber den konvex geformten Innenoberflächen der beiden Schneiden wird eine vorteilhafte Deformation der Schneiden im Einsatzfall begünstigt. Hierbei wird davon ausgegangen, dass die Klammeranordnung einen Riss überspannt und bei einer Rissausdehnung ein Abstand zwischen den ersten Endbereichen der Schneiden und den zweiten Endbereichen der Schneiden zunimmt, wodurch es zu einer Streckung oder Begradigung der bogenförmig ausgebildeten Schneiden kommt. Dieser Streckung oder Begradigung wirken die bogenförmig ausgebildeten Verbindungsstege entgegen, da der Kraftfluss über die Verbindungsstege jeweils in einer Normalenrichtung auf die Innenoberflächen einwirkt.

Besonders vorteilhaft ist es, wenn der erste Verbindungssteg und der zweite Verbindungssteg auf einem gemeinsamen Oval angeordnet sind.

Bevorzugt ist vorgesehen, dass der erste Verbindungssteg eine erste Trägerplatte aufweist und dass der zweite Verbindungsteg eine zweite Trägerplatte aufweist, wobei die erste Trägerplatte und die zweite Trägerplatte zusammen mit den Rückenfläche der beiden Schneiden eine, insbesondere ebene, Schlagfläche bilden. Die erste Trägerplatte und die zweite Trägerplatte erstrecken sich jeweils ausgehend von dem ersten Verbindungssteg bzw. dem zweiten Verbindungssteg und denen für eine großflächige Einleitung von Schlagkräften, die mit einem Hammer, insbesondere einem für die Verwendung mit Holzmarkierungsplättchen ausgebildeten Markierungshammer, auf die Rückenflächen der Schneiden und die beiden Trägerplatten eingeleitet werden, um die Klammeranordnung in den Holzstamm einzutreiben.

Zweckmäßig ist es, wenn an konkav geformten Innenoberflächen der Schneiden jeweils in radialer Richtung nach außen abragende Vorsprünge ausgebildet sind. Die Aufgabe der Vorsprünge besteht darin, eine Rutschbewegung der Schneiden im umgebenden Holz zu vermeiden. Bevorzugt ist vorgesehen, dass die Vorsprünge in einer quer zur Schneidrichtung ausgerichteten Querschnittsebene jeweils eine dreieckige Profilierung aufweisen, wobei eine erste Dreiecksseite der Profilierung parallel zur Innenoberfläche ausgerichtet ist und eine zweite Dreiecksseite der Profilierung einen Winkel in einem Intervall von 45 bis 90 Grad mit der Innenoberfläche einschließt. Hierdurch sind die Vorsprünge hinsichtlich einer zu vermeidenden Rutschbewegung im Holz als Hinterschnitte oder Widerhaken ausgebildet und gewährleisten dadurch einen besonders sicheren Halt der jeweiligen Schneide im Holz.

Bei einer bevorzugten Ausführungsform der Erfindung ist vorgesehen, dass den ersten Endbereichen der beiden Schneiden und den zweiten Endbereichen der beiden Schneiden jeweils von der Rückenfläche entgegen der Schneidrichtung abragende Haltezungen ausgebildet sind, wobei Innenflächen einander gegenüberliegender Haltezungen jeweils mit einer konkaven Ausnehmung versehen sind. Die Haltezungen dienen dazu, die Klammeranordnung formschlüssig an einem Markierungshammer, der für die Verwendung mit Holzmarkierungsplättchen ausgebildet ist, aufzunehmen. Hierzu sind die Haltezungen in gleicher Weise wie entsprechende Haltezungen von Holzmarkierungsplättchen ausgebildet. Bevorzugt ist vorgesehen, dass der Markierungshammer einen kreiszylindrischen Hammerkopf mit einer eben ausgebildeten Schlagfläche aufweist und benachbart zu Schlagfläche an der zylindermantelförmigen Außenumfangsfläche des Hammerkopfs eine umlaufende Nut ausgebildet ist, in die die Haltezungen jeweils mit radial nach innen vorspringenden Endabschnitten eingreifen können.

Vorteilhafte Ausführungsformen der Erfindung sind in der Zeichnung dargestellt. Hierbei zeigt:
- Figur 1: eine perspektivische Darstellung einer ersten Ausführungsform einer Klammeranordnung in einer Ansicht von schräg oben,
- Figur 2: die Klammeranordnung gemäß der Figur 1 in einer perspektivischen Darstellung von schräg unten,
- Figur 3: eine Draufsicht auf die Klammeranordnung gemäß der Figuren 1 und 2,
- Figur 4: eine Ansicht von unten auf die Klammeranordnung gemäß den Figuren 1 bis 4,
- Figur 5: eine Draufsicht auf eine zweite Ausführungsform einer Klammeranordnung, und
- Figur 6: eine perspektivische Ansicht von Unten auf eine dritte Ausführungsform einer Klammeranordnung.

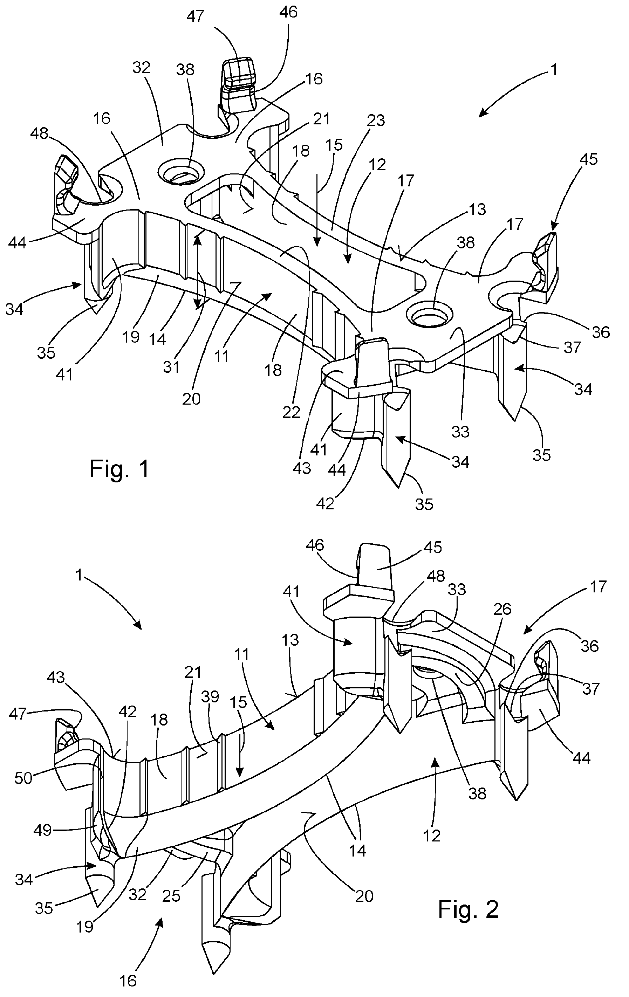

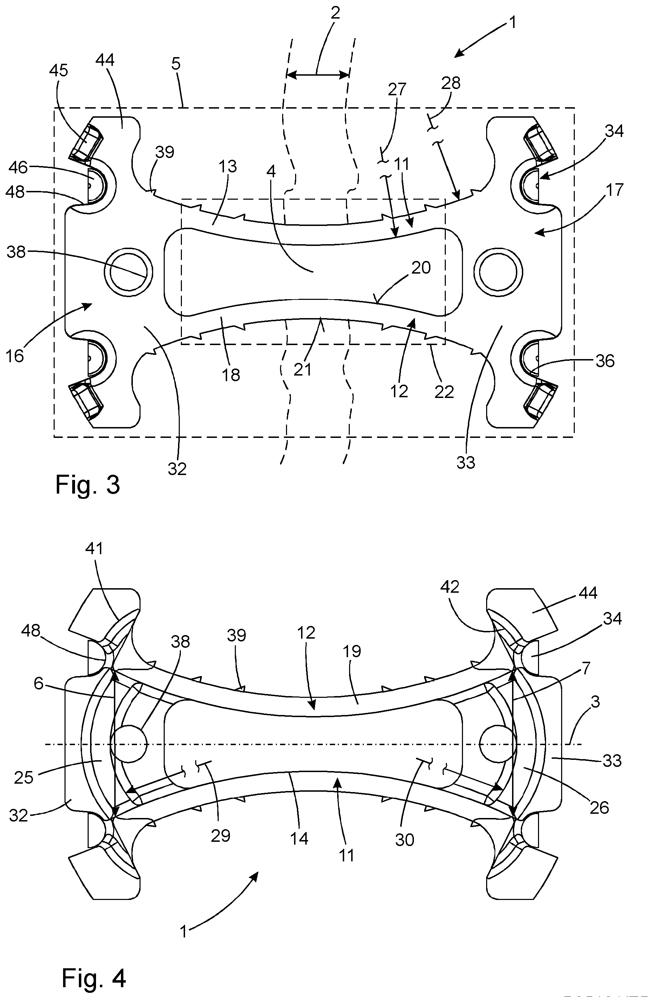

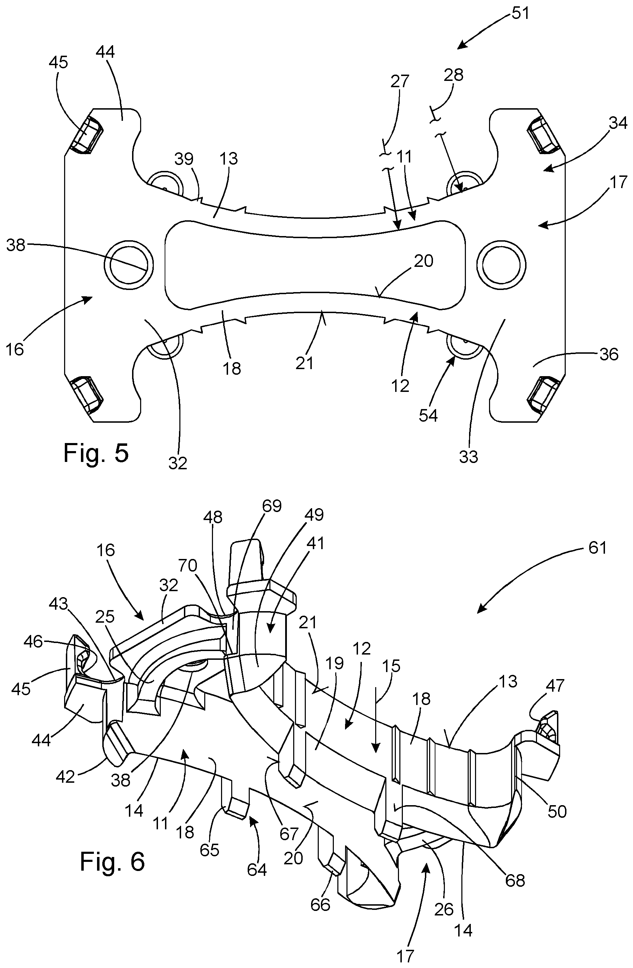

Eine in den Figuren 1 bis 4 gezeigte erste Ausführungsform eine Klammeranordnung 1 ist in gleicher Weise wie eine in der Figur 5 gezeigte zweite Ausführungsform einer Klammeranordnung 51 dazu vorgesehen, in eine Schnittfläche eines nicht dargestellten Holzstamms eingetrieben zu werden, um entweder einen bereits vorhandenen Riss an einer weiteren Ausdehnung zu hindern oder an einer rissgefährdeten Stelle eine Rissbildung zu verhindern. Eine Ausrichtung der Klammeranordnung 1, wie sie auch für die Klammeranordnung 51 gewählt werden kann, ist der schematischen Darstellung der Figur 3 zu entnehmen, in der rein schematisch ein bereits vorhandener Riss 2 angedeutet ist.

Die Klammeranordnung 1 und die Klammeranordnung 51 sind vorzugsweise aus einem Grundstockmaterial hergestellt, wobei als Herstellungsverfahren insbesondere das Kunststoffspritzgussverfahren zur Anwendung kommt.

Die nachstehende Beschreibung der Klammeranordnung 1 trifft bis auf die Anordnung von Zentrierdornen in gleicher Weise auf die Klammeranordnung 51 zu, sodass auf eine neuerliche Beschreibung der Eigenschaften der Klammeranordnung 51 verzichtet wird.

Die Klammeranordnung 1 umfasst eine erste Schneide 11 und eine zweite Schneide 12, die spiegelsymmetrisch zueinander ausgebildet sind. Eine Spiegelebene 3 ist in der Figur 4 eingezeichnet und ist normal zu einem minimalen Abstand 4 zwischen der ersten Schneide 11 und der zweiten Schneide 12 ausgerichtet. Der minimale Abstand 4 ist kleiner als ein erster Abstand 6 zwischen den ersten Endbereichen 16 der beiden Schneiden 11, 12 und kleiner als ein zweiter Abstand 7 zwischen den zweiten Endbereichen 17 der beiden Schneiden 11, 12 ist. Jede der Schneiden 11, 12 umfasst einen bandförmig ausgebildeten Schneidenkörper 18, der sich mit einer konstanten Profilierung ausgehend von einer Rückenfläche 13 der jeweiligen Schneide 11, 12 in einer Schneidrichtung 15 bis zu einem Verjüngungsbereich 19 erstreckt. In dem Verjüngungsbereich 19 verjüngt sich die jeweilige Schneide 11, 12 ausgehend von dem Schneidenkörper 18 bis zu einer Schneidkante 14. Rein exemplarisch ist vorgesehen, dass bei den Schneiden 11, 12 die Verjüngung ausschließlich ausgehend von einer Innenoberfläche 20 der Schneide 11, 12 erfolgt, während eine Außenoberfläche 21 der jeweiligen Schneide 11, 12 in geradliniger Verlängerung des Schneidenkörpers 18 ausgebildet ist.

Rein exemplarisch weisen beide Schneiden 11, 12 in einer Querschnittsebene 5, die parallel zur Darstellungsebene der Figur 3 ausgerichtet ist, eine Krümmung auf. Die Krümmungen der konkav ausgebildeten Innenoberfläche 20 und der konvex ausgebildeten Außenoberfläche 21 sind vorzugsweise derart aufeinander abgestimmt, dass die Innenoberfläche 20 und die Außenoberfläche 21 zumindest bereichsweise, insbesondere über ihre gesamte Erstreckung, parallel zueinander ausgerichtet sind. Beispielhaft ist vorgesehen, dass die Krümmungen der Innenoberfläche 20 und der Außenoberfläche 21 jeweils nicht dargestellten Kreisabschnitten folgen und somit jeweils einen konstanten Krümmungsradius 27, 28 aufweisen.

Die beiden Schneiden 11, 12 sind an einem ersten Endbereich 16 mit einem ersten Verbindungssteg 25 und an einem zweiten Endbereich 17 mit einem zweiten Verbindungssteg 26 miteinander verbunden. Beispielhaft ist vorgesehen, dass der erste Verbindungssteg 25 einem nicht dargestellten Kreisabschnitt folgt und einen ersten Krümmungsradius 29 aufweist und dass der zweite Verbindungsteg 26 einem nicht dargestellten Kreisabschnitt folgt und einen zweiten Krümmungsradius 30 aufweist, der rein exemplarisch mit dem ersten Krümmungsradius 29 übereinstimmt. Bevorzugt sind die beiden Krümmungsradien 29, 30 derart auf den Krümmungsradius 27 der Innenoberfläche 20 abgestimmt, dass die beiden Verbindungsstege 25 und 26 jeweils in einer Normalenrichtung auf die jeweiligen Innenoberflächen 20 der Schneiden 11, 12 treffen. Alternativ zu einer Ausrichtung an einem Kreisabschnitt kann auch vorgesehen sein, dass die beiden Verbindungsstege 25, 26 als Abschnitte eines nicht dargestellten Ovals ausgebildet sind.

Beispielhaft sind den Verbindungsstegen 25, 26 jeweils als Planparallelplatten ausgebildete Trägerplatten 32, 33 zugeordnet. Diese Trägerplatten 32, 33 erstrecken sich parallel zu einer von den Rückenflächen 13 der beiden Schneiden 11, 12 bestimmten, nicht näher dargestellten Schlagebene und dienen wie die Verbindungsstege 25, 26 der Verbindung der beiden Schneiden 11, 12. Jede der beiden Trägerplatten 32, 33 ist von einer Führungsbohrung 38 durchsetzt, sodass die Klammeranordnung 1 zu Lagerungszwecken mit weiteren, nicht dargestellten Klammeranordnungen auf ebenfalls nicht dargestellte Führungsdorne aufgefädelt werden kann.

Jede der beiden Schneiden 11, 12 ist sowohl am ersten Endbereich 16 als auch am zweiten Endbereich 17 mit einer Querschneide 41 versehen. Beispielhaft ragt die Querschneide 41 in einem rechten Winkel zum ersten Endbereich 16 bzw. zum zweiten Endbereich 17 der jeweiligen Schneide 11, 12 ab. Dementsprechend ist auch eine Querschneidkante 42 in einem rechten Winkel zur Schneidkante 14 ausgerichtet. Beispielhaft ist die Querschneide 41 abweichend von den Schneiden 11, 12 in der Schneidrichtung 15 beidseitig verjüngt ausgebildet, wobei ein Winkel einer Querschneidenaussenfläche 49 gegenüber der Schneidrichtung 15 größer als ein Winkel einer Querschneideninnenfläche 50 gegenüber der Schneidrichtung 15 gewählt sein kann. Die Querschneide 41 bildet eine endseitige Verdickung für die Schneide 11, 12, wobei diese Verdickung in der Art eines Ankers eine Zugkrafteinleitung in die Klammeranordnung 1 für Zugkräfte ermöglicht, die in Richtung eines Abstands zwischen dem ersten Verbindungssteg 25 und dem zweiten Verbindungssteg 26 und bevorzug quer zu einer Rissrichtung eines zu begrenzenden Risses in einem Baumstamm ausgerichtet sind.

Angrenzend an eine Rückenfläche 43 der Querschneide 41 erstreckt sich ein plattenförmig ausgebildeter Trägerabschnitt 44, von dem aus entgegen der Schneidrichtung 15 eine Haltezunge 45 abragt. Jede der Haltezungen 45 ist mit einer Ausnehmung 46 versehen, durch die ein Haltevorsprung 47 gebildet wird. Durch die rein exemplarisch vier Haltezungen 45 kann die Klammeranordnung 1 formschlüssig an einem nicht dargestellten Markierungshammer angeclipst werden, mit dem der Eintreibvorgang für die Klammeranordnung 1 durchgeführt werden kann.

An der Innenoberfläche 20 der Schneiden 11, 12 sind rein exemplarisch jeweils sechs in radialer Richtung nach innen abragende Vorsprünge 39 ausgebildet, die gemäß der Darstellung der Figuren 3 und 4 eine dreiecksförmige Profilierung aufweisen. Die Vorsprünge 39 denen in gleicher Weise wie die Querschneiden 41 dazu, eine Bewegung der jeweiligen Schneide 11, 12 in einer Richtung tangential zur Außenoberfläche 21 zu verhindern.

Beispielhaft ist jeder der Querschneiden 41 ein Zentrierdorn 34 zugeordnet, der sich in der Schneidrichtung 15 über die Schneidkante 14 der jeweiligen Schneide 11, 12 erstreckt und endseitig eine Zentrierspitze 35 aufweist. Rein exemplarisch ist an einer der Zentrierspitze 34 abgewandten Rückseite 36 des Zentrierdorns 34 eine Vertiefung 37 ausgebildet, die in ihre Geometrie an die Geometrie der Zentrierspitze 35 angepasst ist. Ferner ist zwischen der jeweiligen Trägerplatte 32, 33 und dem der Querschneide 41 zugeordneten Trägerabschnitten 44 jeweils eine Aussparung 48 ausgebildet, sodass bei einer Aufreihung mehrerer Klammeranordnungen 1 längs der Schneidrichtung 15 die Zentrierdorn 34 einer vorausgehenden Klammeranordnung 1 in den Vertiefungen 37 der nachfolgenden Klammeranordnung 1 aufgenommen werden können. Wie beispielsweise den Darstellungen der Figuren 1 und 2 entnommen werden kann, sind die Zentrierdorne 34 jeweils als hälftig abgeschnittene Rotationskörper ausgebildet, wobei eine nicht näher dargestellte Rotationsachse der Zentrierdorn 34 parallel zur Schneidrichtung 15 ausgerichtet ist.

Rein exemplarisch sind die beiden Schneiden 11, 12 jeweils in einem mittleren Abschnitt 22 frei beweglich, da sie jeweils nur an ihren ersten und zweiten Endbereichen 16, 17 miteinander verbunden sind. Bevorzugt ist eine Erstreckung der Trägerplatte 32 und der zweiten Trägerplatte 33 längs der Schneidkante 14 kleiner als eine Erstreckung der jeweiligen mittleren Abschnitte 22.

Beispielhaft ist vorgesehen, dass der Krümmungsradius 27 der Innenoberfläche 20 und der Krümmungsradius 28 der Außenoberfläche 28 das 5 bis 10-fache eines Abstands 31 zwischen der Rückenfläche 16 und der Schneidkante 14 beträgt.

Die in der Figur 5 gezeigte zweite Ausführungsform einer Klammeranordnung 51 unterscheidet sich von der ersten Ausführungsform der Klammeranordnung 1, wie sie in den Figuren 1 bis 4 gezeigt ist, durch die Anordnung der Zentrierdorne 54, die abweichend von der Klammeranordnung 1 nicht an den Querschneiden 41, sondern direkt an den beiden Schneiden 11, 12 angeordnet sind.

Die in der Figur 6 gezeigte Ausführungsform einer Klammeranordnung 61 ist eine Variante der zweiten Ausführungsform der Klammeranordnung 51, wie sie in der Figur 5 dargestellt ist. Bei der Klammeranordnung 61 sind die Zentrierdorne 64 übereinstimmend mit der Klammeranordnung 51 abseits der Querschneiden 41 angeordnet.

Abweichend von der Klammeranordnung 51 sind die Zentrierdorne 64 als Fortsätze der Schneiden 11, 12 ausgebildet und längs der Schneidrichtung 15 erstreckt. Beispielhaft weisen die Zentrierdorne 64 in einer nicht dargestellten Querschnittsebene, die quer zur Schneidrichtung 14 ausgerichtet ist, einen rechteckigen, insbesondere einen quadratischen, Querschnitt auf.

Rein exemplarisch ist jeder der Zentrierdorne 64 an einem der Schneide 11 oder 12 abgewandten Endbereich mit einer symmetrisch keilförmig in Schneidrichtung verjüngten Zentrierschneide 65 versehen. Alternativ kann der jeweilige Zentrierdorn bei einer nicht dargestellten Ausführungsform eine asymmetrische Keilform, insbesondere eine nur einseitige Keilform wie die Schneide 11, 12, aufweisen.

Eine Schneidkante 66 der Zentrierschneide 65 ist parallel zur Schneidkante 14 der jeweiligen Schneide 11, 12 ausgerichtet. Hierdurch kann vermieden werden, dass nach einem Eindringen der Zentrierdorne 64 in den zu stabilisierenden Holzstamm bei einem nachfolgenden Eindringen der Schneiden 11, 12 in den Holzstamm unerwünschte Torsionsspannungen in den Schneiden 11, 12 sowie im Holzstamm hervorgerufen werden, wie dies der Fall sein könnte, wenn die Schneidkanten 66 der Zentrierdorne 64 nicht parallel zu den Schneidkanten 14 der Schneiden 11, 12 ausgerichtet wären.

Ferner ist bei der Ausführungsform gemäß der Figur 6 rein exemplarisch vorgesehen, dass eine Innenoberfläche 67 des Zentrierdorns 64 flächenbündig mit der Innenoberfläche 20 der Schneide 11 oder 12 ausgebildet ist. Zudem ist rein exemplarisch vorgesehen, dass eine Außenoberfläche 68 des Zentrierdorns 64 flächenbündig mit der Außenoberfläche 21 der Schneide 11 oder 12 ausgebildet ist. Hierdurch wird erreicht, dass die Zentrierdorne 64 in einem Zustand, in dem die Klammeranordnung 61 bestimmungsgemäß in den nicht dargestellten Holzstamm eingeschlagen ist, in einer quer zur Schneidrichtung 14 ausgerichteten Querschnittsebene die gleiche Profilierung wie die Schneiden 11, 12 aufweisen, wodurch der Eindringvorgang für die Klammeranordnung 61 in den Holzstamm begünstigt wird. Mit anderen Worten ist durch die Anordnung und Ausgestaltung der Zentrierspitzen 64 sichergestellt, dass eine Projektion der Zentrierspitzen 64 auf eine quer zur Schneidrichtung ausgerichteten Projektionsebene, die mit der Querschnittebene 5 gemäß der Figur 3 übereinstimmt, in Überdeckung mit einer Projektion der jeweiligen Schneide 11 oder 12 steht.

Durch die Anordnung der Zentrierdorne 64 in Verlängerung der Schneide 11 oder 12 ist während des Einschlagvorgangs für die Klammeranordnung 61 ein vorteilhafter Kraftfluss innerhalb der Klammeranordnung gewährleistet. Rein exemplarisch wird davon ausgegangen, dass ein Einschlagvorgang für die Klammeranordnung 61 mit einem nicht dargestellten Markierungshammer erfolgt, der für die Verarbeitung von Holzmarkierungsplättchen ausgebildet ist und beispielhaft einen kreiszylindrisch ausgebildeten Hammerkopf aufweist, der mit einer umlaufenden Ringnut versehen ist, in die die Haltevorsprünge 47 der Haltezungen 45 formschlüssig eingreifen können. Dabei liegt eine eben ausgebildete Stirnfläche des Markierungshammers zumindest im Wesentlichen plan an den Rückenflächen 13 der Schneiden 11, 12 an. Wird nun der Markierungshammer mit der daran aufgenommenen Klammeranordnung 61 im Zuge einer Schlagbewegung beschleunigt und trifft die Klammeranordnung 61 mit den Zentrierdornen 64 auf die zumindest im Wesentlichen ebene Stirnfläche des Holzstamms, so erfolgt eine Kraftübertragung zwischen dem Markierungshammer, der Klammeranordnung 61 und dem Holzstamm. Hierbei stellt sich ein im Wesentlichen geradliniger Kraftfluss ausgehend von der Rückenfläche 13 durch die Schneide 11, 12 in die Zentrierspitzen 64 ein. Unerwünschte Kippkräfte durch schräg zueinander ausgerichtete Schneidenbereiche, die zu einer Erhöhung der Eintreibkräfte führen würden, die für das Eintreiben der Klammeranordnung 61 in den Baumstamm erforderlich sind, werden dadurch vermieden.

Bei der Ausführungsform der Klammeranordnung 61 gemäß der Figur 6 erstreckt sich, insbesondere in Schneidrichtung 15, ausgehend von der Aussparung 48 eine konkav gekrümmte Profilfläche 69 bis zu einer Querschneidenstufe 70. Die Querschneidenstufe 70 ragt quer zur Schneidrichtung von der Profilfläche 69 ab und bildet einen Hinterschnitt gegen die Schneidrichtung 15. Somit verringert die Querschneidenstufe 70 das Risiko, dass sich die Klammeranordnung 61 entgegen der Schneidrichtung 15 aus dem nicht dargestellten Holzstamm herausarbeitet, beispielsweise aufgrund von Temperaturschwankungen und damit verbundenen unterschiedlichen Ausdehnungsänderungen der Klammeranordnung 61 und des Holzstammes.

Bei einer weiteren, nicht dargestellten Ausführungsform einer Klammeranordnung ragen die Querschneiden in der Schneidrichtung über die Schneidkanten der Schneiden hinaus und können somit auch eine Funktion als Zentrierelemente erfüllen, wobei in diesem Fall auf separat ausgebildete Zentrierdorn verzichtet werden kann.

## Patentansprüche

1. Klammeranordnung (1; 51; 61) zur Rissbegrenzung bei Baumstämmen, mit zwei Schneiden (11, 12), die jeweils von einer Rückenfläche (13) bis zu einer Schneidkante (14) längs einer Schneidrichtung (15) erstreckt sind und die in der Schneidrichtung (15) verjüngt ausgebildet sind, wobei die Schneidrichtungen (15) der beiden Schneiden (11, 12) parallel zueinander ausgerichtet sind und wobei die beiden Schneiden (11, 12), insbesondere ausschließlich, von einem ersten Verbindungssteg (25), der sich zwischen ersten Endbereichen (16) der beiden Schneiden (11, 12) erstreckt, und von einem zweiten Verbindungssteg (26), der sich und zwischen zweiten Endbereichen (17) der beiden Schneiden (11, 12) erstreckt, verbunden sind.

2. Klammeranordnung (1; 51; 61) nach Anspruch 1, **dadurch gekennzeichnet, dass** der erste Verbindungssteg (25) und der zweite Verbindungsteg (26) jeweils zwischen den Rückenflächen (13) der beiden Schneiden (11, 12) erstreckt sind.

3. Klammeranordnung (1; 51; 61) nach Anspruch 1 oder 2, **dadurch gekennzeichnet, dass** die beiden Schneiden (11, 12) in einer quer zur Schneidrichtung (15) ausgerichteten Querschnittsebene eine Krümmung mit einem Krümmungsradius (27, 28) aufweisen, der 5-mal bis 10-mal größer als ein Abstand (31) zwischen der Rückenfläche (13) und der Schneidkante (14) ist.

4. Klammeranordnung (1; 51; 61) nach Anspruch 1, 2 oder 3, **dadurch gekennzeichnet, dass** ein erster Abstand (6) zwischen den ersten Endbereichen (16) der beiden Schneiden (11, 12) und ein zweiter Abstand (7) zwischen den zweiten Endbereichen (17) der beiden Schneiden (11, 12) größer sind als ein Abstand (4) der beiden Schneiden (11, 12) in einem Zentralbereich zwischen dem ersten Endbereich (16) und dem zweiten Endbereich (17).

5. Klammeranordnung (1; 51; 61) nach Anspruch 1, 2, 3 oder 4, **dadurch gekennzeichnet, dass** wenigstens eine Schneide (11, 12) mit einem Zentrierdorn (34; 54; 64) versehen ist, der sich in der Schneidrichtung (15) über die Schneidkante (14) hinaus erstreckt und der eine in der Schneidrichtung (15) verjüngt ausgebildete Zentrierspitze (35; 65) aufweist.

6. Klammeranordnung (1; 51; 61) nach Anspruch 5, **dadurch gekennzeichnet, dass** der Zentrierdorn (34; 54; 64) quer zur Schneidrichtung (15) angrenzend an die Schneide (11, 12) angeordnet ist und/oder dass der Zentrierdorn (34; 54) an einer Rückseite, die der Zentrierspitze (16) abgewandt ist, eine Vertiefung (37) mit einer Geometrie aufweist, die einer Geometrie der Zentrierspitze (35) entspricht.

7. Klammeranordnung (1; 51; 61) nach Anspruch 5, **dadurch gekennzeichnet, dass** der Zentrierdorn (64) als in Schneidrichtung (15) erstreckte Verlängerung der Schneide (11, 12) ausgebildet ist.

8. Klammeranordnung (1; 51; 61) nach einem der vorhergehenden Ansprüche, **dadurch gekennzeichnet, dass** die beiden Schneiden (11, 12) spiegelsymmetrisch zueinander ausgerichtet sind, wobei eine Spiegelebene (3) für die beiden Schneiden (11, 12) normal zu einem minimalen Abstand (4) der beiden Schneiden (11, 12) ausgerichtet ist.

9. Klammeranordnung (1; 51; 61) nach einem der vorhergehenden Ansprüche, **dadurch gekennzeichnet, dass** die beiden Schneiden (11, 12) jeweils am ersten Endbereich (16) und/oder am zweiten Endbereich (17) mit einer Querschneide (41) versehen sind, deren Querschneidkante (42) in einem Winkelbereich zwischen 70 Grad und 110 Grad zur Schneidkante (14) ausgerichtet ist

10. Klammeranordnung (1; 51; 61) nach einem der vorhergehenden Ansprüche, **dadurch gekennzeichnet, dass** der erste Verbindungssteg (25) und der zweite Verbindungsteg (26) jeweils bogenförmig ausgebildet sind, wobei einander entgegengesetzte Endbereiche des ersten Verbindungsstegs (25) und einander entgegengesetzte Endbereiche des zweiten Verbindungsstegs (26) jeweils normal zu konvex geformten Innenoberflächen (20) der beiden Schneiden (11, 12) ausgerichtet sind.

11. Klammeranordnung (1; 51; 61) nach Anspruch 10, **dadurch gekennzeichnet, dass** der erste Verbindungssteg (25) und der zweite Verbindungssteg (26) auf einem gemeinsamen Oval, insbesondere auf einem Kreis, angeordnet sind.

12. Klammeranordnung (1; 51; 61) nach Anspruch 10 oder 11, **dadurch gekennzeichnet, dass** der erste Verbindungssteg (25) eine erste Trägerplatte (32) aufweist und dass der zweite Verbindungsteg (26) eine zweite Trägerplatte (33) aufweist, wobei die erste Trägerplatte (32) und die zweite Trägerplatte (33) zusammen mit den Rückenfläche (13) der beiden Schneiden (11, 12) eine, insbesondere ebene, Schlagfläche bilden.

13. Klammeranordnung (1; 51; 61) nach einem der vorhergehenden Ansprüche, **dadurch gekennzeichnet, dass** an konkav geformten Innenoberflächen (20) der Schneiden (11, 12) jeweils in radialer Richtung nach außen abragende Vorsprünge (39) ausgebildet sind.

14. Klammeranordnung (1; 51; 61) nach Anspruch 13, **dadurch gekennzeichnet, dass** die Vorsprünge (39) in einer quer zur Schneidrichtung (15) ausgerichteten Querschnittsebene jeweils eine dreieckige Profilierung aufweisen, wobei eine erste Dreiecksseite der Profilierung parallel zur Innenoberfläche (20) ausgerichtet ist und eine zweite Dreiecksseite der Profilierung einen Winkel in einem Intervall von 45 bis 90 Grad mit der Innenoberfläche einschließt.

15. Klammeranordnung (1; 51; 61) nach einem der vorhergehenden Ansprüche, **dadurch gekennzeichnet, dass** den ersten Endbereichen (16) der beiden Schneiden (11, 12) und den zweiten Endbereichen (17) der beiden Schneiden jeweils von der Rückenfläche (13) entgegen der Schneidrichtung (15) abragende Haltezungen (45) ausgebildet sind, wobei Innenflächen einander gegenüberliegender Haltezungen (45) jeweils mit einer konkaven Ausnehmung (46) versehen sind.

## Claims

1. Clamp (1; 51; 61) for limiting cracks in logs, having two blades (11, 12) which each extend from a back surface (13) to a cutting edge (14) along a cutting direction (15) and which are tapered in the cutting direction (15), the cutting directions (15) of the two blades (11, 12) are aligned parallel to one another and wherein the two blades (11, 12) are connected, in particular exclusively, by a first connecting bar (25) which extends between first end regions (16) of the two blades (11, 12) and by a second connecting bar (26) which extends between second end regions (17) of the two blades (11, 12).

2. Clamp (1; 51; 61) according to claim 1, **characterized in that** the first connecting bar (25) and the second connecting bar (26) each extend between the back surfaces (13) of the two blades (11, 12).

3. Clamp (1; 51; 61) according to claim 1 or 2, **characterized in that** the two blades (11, 12) have a curvature with a radius of curvature (27, 28) which is 5 times to 10 times greater than a distance (31) between the back surface (13) and the cutting edge (14) in a cross-sectional plane aligned transversely to the cutting direction (15).

4. Clamp (1; 51; 61) according to claim 1, 2 or 3, **characterized in that** a first distance (6) between the first end regions (16) of the two blades (11, 12) and a second distance (7) between the second end regions (17) of the two blades (11, 12) are greater than a distance (4) between the two blades (11, 12) in a central region between the first end region (16) and the second end region (17).

5. Clamp (1; 51; 61) according to claim 1, 2, 3 or 4, **characterized in that** at least one blade (11, 12) is provided with a centering mandrel (34; 54; 64) which extends beyond the cutting edge (14) in the cutting direction (15) and which has a centering tip (35; 65) which is tapered in the cutting direction (15).

6. Clamp (1; 51; 61) according to claim 5, **characterized in that** the centering mandrel (34; 54; 64) is arranged transversely to the cutting direction (15) adjacent to the blade (11, 12) and/or **in that** the centering mandrel (34; 54) has, on a rear side facing away from the centering tip (16), a depression (37) with a geometry which corresponds to a geometry of the centering tip (35).

7. Clamp (1; 51; 61) according to claim 5, **characterized in that** the centering mandrel (64) is designed as an extension of the blade (11, 12) extending in the cutting direction (15).

8. Clamp (1; 51; 61) according to one of the preceding claims, **characterized in that** the two blades (11, 12) are aligned mirror-symmetrically with respect to one another, a mirror plane (3) for the two blades (11, 12) being aligned normal to a minimum distance (4) between the two blades (11, 12).

9. Clamp (1; 51; 61) according to one of the preceding claims, **characterized in that** the two blades (11, 12) are each provided at the first end region (16) and/or at the second end region (17) with a transverse blade (41), a transverse blade cutting edge (42) of which is aligned at an angle of between 70 degrees and 110 degrees to the cutting edge (14)

10. Clamp (1; 51; 61) according to one of the preceding claims, **characterized in that** the first connecting bar (25) and the second connecting bar (26) are each of arcuate design, with mutually opposite end regions of the first connecting bar (25) and mutually opposite end regions of the second connecting bar (26) each being aligned normal to convexly shaped inner surfaces (20) of the two blades (11, 12).

11. Clamp (1; 51; 61) according to claim 10, **characterized in that** the first connecting bar (25) and the second connecting bar (26) are arranged on a common oval, in particular on a circle.

12. Clamp (1; 51; 61) according to claim 10 or 11, **characterized in that** the first connecting bar (25) has a first carrier plate (32) and **in that** the second connecting bar (26) has a second carrier plate (33), the first carrier plate (32) and the second carrier plate (33) together with the back surface (13) of the two blades (11, 12) forming an, in particular flat, impact surface.

13. Clamp (1; 51; 61) according to one of the preceding claims, **characterized in that** projections (39) projecting outwards in the radial direction are formed on concave inner surfaces (20) of the blades (11, 12).

14. Clamp (1; 51; 61) according to claim 13, **characterized in that** the projections (39) each have a triangular profiling in a cross-sectional plane aligned transversely to the cutting direction (15), a first triangular side of the profiling being aligned parallel to the inner surface (20) and a second triangular side of the profiling enclosing an angle in an interval of 45 to 90 degrees with the inner surface.

15. Clamp (1; 51; 61) according to one of the preceding claims, **characterized in that** the first end regions (16) of the two blades (11, 12) and the second end regions (17) of the two blades are each formed with retaining tongues (45) projecting from the back surface (13) in the direction opposite to the cutting direction (15), inner surfaces of mutually opposite retaining tongues (45) each being provided with a concave recess (46).

## Revendications

1. Ensemble formant agrafe (1 ; 51 ; 61) pour limiter les fissures dans les troncs d'arbre, avec deux lames (11, 12), qui s'étendent respectivement d'une face arrière (13) jusqu'à une arête de coupe (14) le long d'un sens de coupe (15) et qui sont effilées dans le sens de coupe (15), dans lequel les directions de coupe (15) des deux lames (11, 12) sont orientées parallèlement l'une à l'autre et dans lequel les deux lames (11, 12) sont reliées, en particulier exclusivement, par une première nervure de liaison (25), qui s'étend entre de premières zones d'extrémité (16) des deux lames (11, 12), et par une deuxième nervure de liaison (26), qui s'étend entre des deuxièmes zones d'extrémité (17) des deux lames (11, 12).

2. Ensemble formant agrafe (1 ; 51 ; 61) selon la revendication 1, **caractérisé en ce que** la première nervure de liaison (25) et la deuxième nervure de liaison (26) s'étendent respectivement entre les surfaces dorsales (13) des deux lames (11, 12).

3. Ensemble formant agrafe (1 ; 51 ; 61) selon la revendication 1 ou 2, **caractérisé en ce que** les deux lames (11, 12) présentent, dans un plan de coupe orienté transversalement par rapport au sens de coupe (15), une courbure avec un rayon de courbure (27, 28), qui est 5 fois à 10 fois plus grand qu'une distance (31) entre la face arrière (13) et l'arête de coupe (14).

4. Ensemble formant agrafe (1 ; 51 ; 61) selon la revendication 1, 2 ou 3, **caractérisé en ce qu'**une première distance (6) entre les premières zones d'extrémité (16) des deux lames (11, 12) et une deuxième distance (7) entre les deuxièmes zones d'extrémité (17) des deux lames (11, 12) sont plus grandes qu'une distance (4) des deux lames (11, 12) dans une zone centrale entre la première zone d'extrémité (16) et la deuxième zone d'extrémité (17).

5. Ensemble formant agrafe (1 ; 51 ; 61) selon la revendication 1, 2, 3 ou 4, **caractérisé en ce qu'**au moins une lame (11, 12) est pourvue d'un mandrin de centrage (34 ; 54 ; 64), qui s'étend dans le sens de coupe (15) au-delà de l'arête de coupe (14) et qui présente une pointe de centrage (35 ; 65) effilée dans le sens de coupe (15).

6. Ensemble formant agrafe (1 ; 51 ; 61) selon la revendication 5, **caractérisé en ce que** le mandrin de centrage (34 ; 54 ; 64) est disposé transversalement au sens de coupe (15) de manière adjacente à la lame (11, 12) et/ou que le mandrin de centrage (34 ; 54) présente un creux (37) d'une géométrie correspondant à une géométrie de la pointe de centrage (35) sur une face arrière qui est opposée à la pointe de centrage (16).

7. Ensemble formant agrafe (1 ; 51 ; 61) selon la revendication 5, **caractérisé en ce que** le mandrin de centrage (64) est réalisé comme une rallonge de la lame (11, 12) s'étendant dans le sens de coupe (15).

8. Ensemble formant agrafe (1 ; 51 ; 61) selon l'une quelconque des revendications précédentes, **caractérisé en ce que** les deux lames (11, 12) sont orientées symétriquement en miroir l'une par rapport à l'autre, dans lequel un plan de miroir (3) pour les deux lames (11, 12) est orienté normalement à une distance minimale (4) des deux lames (11, 12).

9. Ensemble formant agrafe (1 ; 51 ; 61) selon l'une quelconque des revendications précédentes, **caractérisé en ce que** les deux lames (11, 12) sont pourvues respectivement sur la première zone d'extrémité (16) et/ou sur la deuxième zone d'extrémité (17) d'une lame transversale (41) dont l'arête de coupe transversale (42) est orientée dans une plage angulaire comprise entre 70 degrés et 110 degrés par rapport à l'arête de coupe (14).

10. Ensemble formant agrafe (1 ; 51 ; 61) selon l'une quelconque des revendications précédentes, **caractérisé en ce que** la première nervure de liaison (25) et la deuxième nervure de liaison (26) sont respectivement formées en forme d'arc, dans lequel des zones d'extrémité opposées l'une à l'autre de la première nervure de liaison (25) et des zones d'extrémité opposées l'une à l'autre de la deuxième nervure de liaison (26) sont respectivement orientées de manière normale par rapport à des surfaces intérieures (20) des deux lames (11, 12) de forme convexe.

11. Ensemble formant agrafe (1 ; 51 ; 61) selon la revendication 10, **caractérisé en ce que** la première nervure de liaison (25) et la deuxième nervure de liaison (26) sont disposées sur un ovale commun, en particulier sur un cercle.

12. Ensemble formant agrafe (1 ; 51 ; 61) selon la revendication 10 ou 11, **caractérisé en ce que** la première nervure de liaison (25) présente une première plaque support (32) et que la deuxième nervure de liaison (26) présente une deuxième plaque support (33), dans lequel la première plaque support (32) et la deuxième plaque support (33) forment une surface de frappe, en particulier plane, conjointement avec la face arrière (13) des deux lames (11, 12).

13. Ensemble formant agrafe (1 ; 51 ; 61) selon l'une quelconque des revendications précédentes, **caractérisé en ce que** des saillies (39) dépassant vers l'extérieur dans la direction radiale sont réalisées sur des surfaces intérieures (20) de forme concave des lames (11, 12).

14. Ensemble formant agrafe (1 ; 51 ; 61) selon la revendication 13, **caractérisé en ce que** les saillies (39) présentent chacune un profilage triangulaire dans un plan de coupe transversal au sens de coupe (15), dans lequel un premier côté triangulaire du profilage est orienté parallèlement à la surface intérieure (20) et un deuxième côté triangulaire du profilage forme un angle dans un intervalle de 45 à 90 degrés avec la surface intérieure.

15. Ensemble formant agrafe (1 ; 51 ; 61) selon l'une quelconque des revendications précédentes, **caractérisé en ce que** des languettes de maintien (45) dépassant respectivement de la face arrière (13) dans le sens opposé au sens de coupe (15) sont réalisées sur les premières zones d'extrémité (16) des deux lames (11, 12) et les deuxièmes zones d'extrémité (17) des deux lames, dans lequel des surfaces intérieures de languettes de maintien (45) se faisant face sont respectivement pourvues d'un évidement (46) concave.
